Europäisches Patentamt

European Patent Office

Office européen des brevets

(11) Publication number: **0 121 943**
**B1**

(12) EUROPEAN PATENT SPECIFICATION

(45) Date of publication of patent specification: **15.07.87**　　(51) Int. Cl.⁴: **F 16 B 41/00,** G 09 F 3/03

(21) Application number: **84104071.0**

(22) Date of filing: **11.04.84**

(54) Tamper resistant seal plug.

(30) Priority: **11.04.83 US 484093**

(43) Date of publication of application:
**17.10.84 Bulletin 84/42**

(45) Publication of the grant of the patent:
**15.07.87 Bulletin 87/29**

(84) Designated Contracting States:
**DE FR GB IT NL**

(56) References cited:
**FR-A-2 510 684**
**GB-A-2 093 552**
**US-A-1 887 557**

(73) Proprietor: **The Singer Company**
**8 Stamford Forum**
**Stamford Connecticut 06904 (US)**

(72) Inventor: **Ruddy, Donald C.**
**2545 Martin Road**
**Willow Grove Pennsylvania 19090 (US)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

The invention refers to an arrangement for resisting the unauthorised removal of a headed screw from a body and providing an indication in the event such removal occurs, comprising an upstanding wall surrounding the head of said screw to define a recess, and a unitary open ended cup shaped plug having a side wall portion and an end closure and adapted to be inserted open end first within said recess to cover said screw head providing an interference fit with said upstanding wall, said end enclosure being within said recess below the outer extremity of said upstanding wall so that said side wall portion is hidden by said upstanding wall and said end closure including a frangible region smaller than said screw head adapted to be broken away to provide access to said screw head and allow removal of said screw head along with said plug from inside said recess.

There are many applications where it is desirable to discourage unauthorised access to the interior of an enclosure. For example, with the high cost of gaseous fuels, there has been an increase in incidents of unauthorised people tampering with the internal mechanisms of gas meters in an attempt to stop or reduce the registration of gas consumption. In the past, there have been proposed and utilised a number of devices which are resistant to such tampering. Some have been quite expensive and require special tools and/or considerable efforts to circumvent, even for the manufacturer. Seal screws and wire have been the standard for years, but have limitations as to their effectiveness.

An arrangement of the described type is known from US—A—1887557. The known arrangement comprises two cup-shaped members. The first one of these members is preferably made of thin metal and shows a flat end wall. The flat end wall has an aperture for receiving the threaded body portion of the screw and is threaded to the body together with the screw where the side walls of the cup extend upwards. The second cup member, the unitary open ended cup shaped plug, has an outer diameter adapted to the inner diameter of the first cup member in order to obtain a snug frictional engagement in between. Such dimensioning, however, is difficult to obtain for pieces which should not be very expensive. Furthermore, since the cup members are said to be of thin metal, it is difficult to maintain the desired shape during storage and handling. It is noted that even slight alterations in the diameters would result in the failure of the arrangement.

It is therefore an object of the present invention to provide an inexpensive tamper resistant arrangement for protecting a gas meter or the like from unauthorised access to its internal mechanism.

The above mentioned problems will be overcome according to the present invention by an arrangement having a cup-shaped plug, the side wall portions of which are formed with an outwardly extending projection providing the interference fit with said upstanding wall and adapted to resist removal of said plug from said recess. The arrangement according to the present invention is inexpensive in production, since it is not necessary to adjust the outer diameter of the plug exactly to the inner diameter of the upstanding wall and to handle the parts carefully so that they will not become deformed. Any oversizing of the height of the projections and/or any deformation will be equalised during setting procedure and will only increase the setting force. Thus, the parts may be produced with a greater clearance and do not need to be handled so carefully. All this reduces the costs.

The embodiment of claim 2 further enhances the safeguard against removal.

Claims 3 and 4 describe two preferred alternative embodiments of the invention.

Claims 5 and 6 describe two preferred alternative embodiments of the frangible region. Both embodiments do not allow the plug to be re-used once removed, and are easily circumvented by those authorised to have access.

The embodiment of claim 7 is not readily duplicated so that counterfeiting thereof is inhibited.

The foregoing will be more readily apparent upon reading the following description in conjunction with the drawings wherein:

FIG. 1 is a plan view of a portion of a gas meter index cover construction in accordance with the principles of this invention;

FIG. 2 is a cross sectional view taken along the line 2—2 of Fig. 1;

FIG. 3 is a top plan view of a first embodiment of a seal plug constructed in accordance with the principles of this invention;

FIG. 4 is a cross sectional view taken along the line 4—4 of Fig. 3;

FIG. 5 is a top plan view of a second illustrative embodiment of a seal plug constructed in accordance with the principles of this invention;

FIG. 6 is a cross sectional view taken along the line 6—6 of Fig. 5; and

FIG. 7 is a cross sectional view showing the seal plug of Figs. 3 and 4 installed in a gas meter cover.

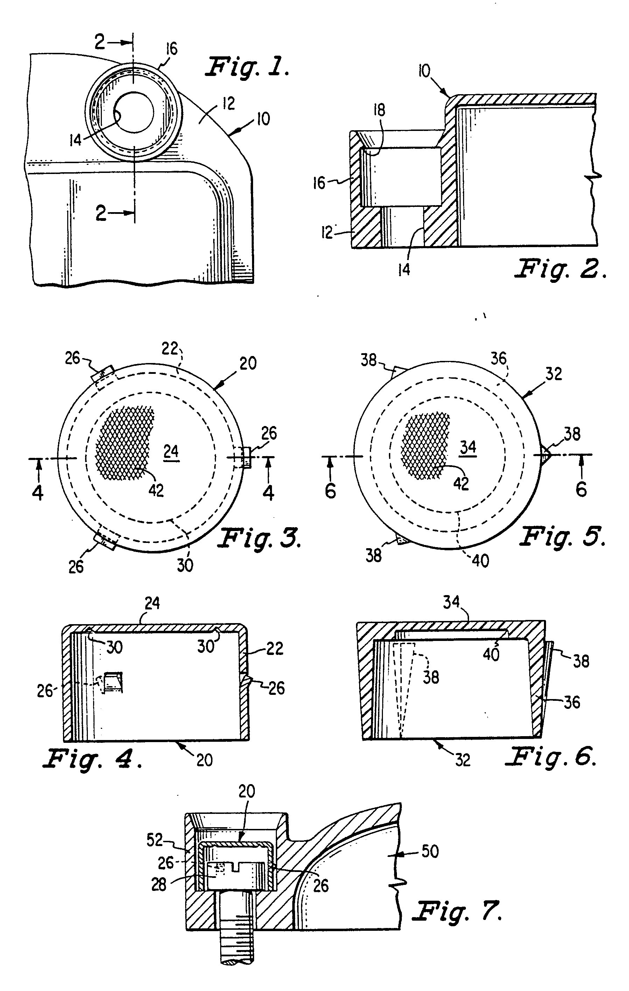

Referring now to the drawings, where like elements in different figures thereof have the same reference character applied thereto, Fig. 1 shows a top plan view of a portion of a gas meter index cover, designated generally by the reference numeral 10 and constructed in accordance with the principles of this invention to accept a seal plug therein. Thus, as is conventional, the index cover 10 includes a flange 12 extending around the periphery thereof through which is provided at least one opening 14 for accepting therethrough an externally threaded screw adapted to be secured in a corresponding internally threaded opening provided in the meter housing (not shown). In accordance with the principles of this invention, an upstanding wall 16 is provided to surround the opening 14 but is spaced sufficiently therefrom to allow the head of the screw to freely pass within the wall 16. Preferably, the wall 16 is circular and concentric with the opening 14. Typically, a gas meter index cover is made of a clear molded plastic and, at its upper end, the wall 16 is formed with an inwardly extending lip 18.

Figs. 3 and 4 illustrate a first embodiment of a seal plug adapted to fit within the confines of the recess formed by the upstanding wall 16. This seal plug, designated generally by the reference numeral 20, is illustratively formed of aluminum or other appropriate metal. The seal plug 20 is a unitary open ended cup shaped member having a side wall portion 22 and an end closure 24. The side wall portion 22 is sized to provide a minimal clearance with the upstanding wall 16 so that the plug may be inserted, open end first, within the upstanding wall 16 but removal thereof can only be effected through a destruction of the plug 20, as will be described hereinafter. To create an interference fit, the side wall 22 is formed with a plurality of lanced out portions 26, illustratively three in number, angularly spaced around the periphery of the side wall 20. These lanced out portions 26, or features, are angled outwardly so that when the plug 20 is inserted open end first within the confines of the upstanding wall 16, the lanced out portions 26 flex back and do not interfere with such insertion. However, like a reverse barb on a fishing hook, the lanced out portions 26 interfere with the removal of the plug 20. Additionally, such removal is further impeded by the inwardly extending lip 18 on the wall 16. Fig. 7 illustrates the plug 20 when inserted over so as to encompass the head of a screw 28 used to fasten a metal cover 50 to the meter housing. Looking at Fig. 7, it will be noted that from the outside of the recess, it is virtually impossible to remove the plug 20 from the confines of the wall 52 without destroying the plug 20, as there are no projections which can be seized, the juncture of the end closure 24 and the side wall portion 22 being relatively smooth, and the end closure 24 lying within the recess below the outer extremity of the upstanding wall 16.

In accordance with the principles of this invention, the end closure is made frangible so that the plug can be removed, but once removed there is provided an indication of such removal. Additionally, once removed the plug cannot be reused. Accordingly, the end closure 24 is formed with a notched annular groove 30 which provides a built in weakness to allow an opening to be made within the seal plug 20. This may be done by a simple tool like a screw driver or an ice pick. The plug 20 may then be gripped or pried out for its removal, there being sufficient clearance provided between the head of the screw 28 and the inner surface of the end closure 24. Alternatively, a screw driver may be inserted through the opening into the slot in the head of the screw 28, and the screw 28 may be removed, taking with it the remnants of the plug 20. When used in conjunction with the construction of Figs. 1 and 2, removal of the plug 20 is further impeded by the inwardly extending lip 18.

Figs. 5 and 6 illustrate a second embodiment of a plug constructed in accordance with the principles of this invention. This plug, designated generally by the reference numeral 32, is illustratively a unitary molded plastic plug having an end closure 34 and side wall portion 36. Spaced about the side wall portion 36 there is provided a plurality of tapered projections 38, illustratively three in number, which provide the same function as the lanced out portions 26 of the embodiment illustrated in Figs. 3 and 4. To make the plug 32 frangible, the end closure 34 is provided with a region 40 of substantially reduced thickness so that it may easily be broken by a simple tool, like a screw driver or ice pick. Alternatively, the frangible region may be formed by molding a notched groove thereabout.

Thus, it is seen that the described seal plug is tamper resistant in that it must be destroyed to be removed. However, it allows an authorized person to have access to the meter by merely destroying the seal plug and replacing it when necessary. The face of the end closure 24, 34 may have thereon a distinctive embossed design or imprint 42 to inhibit duplication, replacement plugs only being made available to authorized users. Additionally, the face of the seal plug may be of a contrasting color with respect to the top of the meter to provide an easily recognizable indication of the absence of the plug.

**Claims**

1. An arrangement for resisting the unauthorised removal of a headed screw (28) from a body (10, 50) and providing an indication in the event such removal occurs, comprising an upstanding wall (16, 52) surrounding the head of said screw (28) to define a recess, and a unitary open ended cup shaped plug (20, 32) having a side wall portion (22, 36) and an end closure (24, 34) and adapted to be inserted open end first within said recess to cover said screw head (28) providing an interference fit with said upstanding wall (16, 52) said end closure (24, 34) being within said recess below the outer extremity of said upstanding wall (16, 52) so that said side wall portion (22, 36) is hidden by said upstanding walls (16, 52) and said end closure (24, 34) including a frangible region (30, 40) smaller than said screw head (28) adapted to be broken away to provide access to said screw head (28) and allow removal of said screw head (28) along with said plug (20, 32) from inside said recess, characterised by said side wall portion (22, 36) being formed with an outwardly extending projection (26, 38) providing the interference fit with said upstanding wall (16, 52) and adapted to resist removal of said plug (20, 32) from said recess.

2. The arrangement according to claim 1 further characterised in that said upstanding wall (16) is formed with an inverted lip (18) near the outer extremity of said wall and extending around the recess-defining interior of said wall.

3. The arrangement according to claims 1 or 2 further characterised in that said plug (20) is formed of a metal material and said projection (26) is formed by lancing out a portion of said side wall portion.

4. The arrangement according to claims 1 or 2 further characterised in that said plug (32) is molded of a plastic material and said projection is a reversely tapered projection (38) formed as a unitary portion of said side wall portion.

5. The arrangement according to claim 1 further characterised in that said frangible region has a periphery defined by an inwardly notched groove (30).

6. The arrangement according to claim 1 further characterised in that said plug (32) is formed of a molded plastic material and said frangible region is a region (40) of reduced thickness relative to the remainder of said plug.

7. The arrangement according to any of claims 1 to 6 further characterised in that said end closure (24, 34) is provided with a distinctive embossed design or imprint (42) so as to inhibit duplication.

**Patentansprüche**

1. Anordnung zum Verhindern der unbefugten Entfernung einer Kopfschraube (28) von einem Körper (10, 50) und zum Liefern einer Anzeige im Falle, daß eine solche Entfernung stattfindet, mit einer aufrechten Wand (16, 52), die den Kopf der Schraube (28), ein Vertiefung bildend, umgibt und mit einem einstückigen, an einem Ende offene, becherförmigen Stopfen (20, 32), der ein Seitenwandteil (22, 36) und einen Endverschluß (24, 34) aufweist und zum Einsetzen, mit dem offenen Ende zuerst, in die Vertiefung ausgebildet ist, um den Schraubenkopf (28), einen Paßstizt mit der Aufrechten Wand (16, 52) bildend, zu überdecken, wobei der Endverschluß (24, 34) in der Ausnehmung unter dem äußeren Ende der aufrechten Wand (16, 52) liegt, so daß das Seitenwandteil (22, 36) durch die aufrechte Wand (16, 52) verborgen ist, und wobei der Endverschluß (24, 34) einen zerstörbaren Bereich (30, 40) aufweist, der kleiner ist als der Schaubenkopf (28) und geeignet ist, weggebrochen zu werden, um einen Zugang zum Schraubenkopf (28) zu bilden und die Entfernung des Schraubenkopfes (28) zusammen mit dem Stopfen (20, 32) aus dem Inneren der Vertiefung zu erlauben, dadurch gekennzeichnet, daß das Seitenwandteil (22, 36) einen sich nach außen erstreckenden Vorsprung (26, 28) enthält, der im Paßsitz mit der Aufrechten Wand (16, 52) steht und dem Entfernen des Stopfens (20, 32) aus der Vertiefung widersteht.

2. Anordnung nach Anspruch 1, weiterhin dadurch gekennzeichnet, daß die aufrechte Wand (16) mit einer sich einwärts erstreckenden Lippe (18) versehen ist, die nahe des äußeren Endes der Wand angeordnet ist und sich um die die Vertiefung umschreibenden Innenseite der Wand erstreckt.

3. Anordnung nach Anspruch 1 oder 2, weiterhin dadurch gekennzeichnet, daß der Stopfen (20) aus einem metallischen Material und der Vorsprung (26) durch Einschneiden eines Teils des Seitenwandteiles geformt ist.

4. Anordnung nach Anspruch 1 oder 2, weiterhin dadurch gekennzeichnet, daß der Stopfen (32) aus einem plastischen Material geformt ist, und daß der Vorsprung ein umgekehrt zugespritzter, einstückig mit dem Seitenwandteil ausgebildeter Vorsprung (38) ist.

5. Anordnung nach Anspruch 1, weiterhin dadurch gekennzeichnet, daß der zerstörbare Bereich einen durch eine nach innen gekerbte Rille (30) definierten Umfang aufweist.

6. Anordnung nach Anspruch 1, weiterhin dadurch gekennzeichnet, daß der Stopfen (32) aus einem geformten plastischen Material hergestellt ist, und daß der zerstörbare Bereich als Bereich (40) mit einer gegenüber der restlichen Wandstärke des Stopfens reduzierten Dicke ausgebildet ist.

7. Anordnung nach einem der Ansprüche 1 bis 6, weiterhin dadurch gekennzeichnet, daß der Endverschluß (24, 34) mit einer unterscheidungskräftigen, geprägten Kennzeichnung oder einem Aufdruck (42) versehen ist, um eine Nachahmung zu verhindern.

**Revendications**

1. Dispositif permettant de résister au retrait non autorisé d'une vis à tête (28) hors d'un corps (10, 50) et permettant de fournir une indication pour le cas où survient un tel retrait, comprenant une paroi dressée (16, 52) qui entoure la tête de ladite vis (28) de façon à délimiter une cavité, et un bouchon (20, 32) en forme de cuvette, d'une pièce et à extrémité ouverte, présentant une partie formant paroi latérale (22, 36) et une fermeture d'extrémité (24, 34) et destiné à être introduit, l'extrémité ouverte la première, dans ladite cavité de façon à recouvrir ladite tête de vis (28) en offrant un ajustement serré avec ladite paroi dressée verticalement (16, 52), ladite fermeture d'extrémité (24, 34) étant située à l'intérieur de ladite cavité au dessous de l'extrémité extérieur de ladite paroi dressée verticalement (16, 52) de façon que ladite partie formant paroi latérale (22, 36) soit cachée par ladite paroi dressée verticalement (16, 52), tandis que ladite fermeture d'extrémité (24, 34) comporte une zone pouvant être rompue (30, 40) plus petite que ladite tête de vis (28) et destinée à être, séparée par rupture de façon à fournir un accès à ladite tête de vis (28) et à permettre de retirer de l'intérieur de ladite cavité ladite tête de vis (28) en même temps que ledit bouchon (20, 32), caractérisé en ce que ladite partie formant paroi latérale (22, 36) est réalisée avec une saillie s'étendant vers l'extérieur (26, 38) qui fournit l'ajustement serré avec ladite paroi dressée verticalement (16, 52) et est destinée à résister à un retrait dudit bouchon (20, 32) hors de ladite cavité.

2. Dispositif selon la revendication 1, caractérisé en outre en ce que la paroi dressée verticalement (16) présente-une lèvre inversée (18) située à proximité de l'extrémité extérieure de cette paroi et s'ètendant tout autour de l'intérieur de cette paroi qui forme une cavité.

3. Dispositif selon les revendications 1 ou 2, caractérisé en outre en ce que ledit bouchon (20) est réalisé en un matériau métallique et ladite saillie (26) est formée en réalisant un crevé sur une partie de la dite paroi latérale.

4. Dispositif selon les revendication 1 ou 2, caractérisé en outre en ce que ledit bouchon (32) est moulé en une matière plastique et ladite saillie est une saillie à inclinaison inverse (38) qui est réalisée sous forme d'une partie venue d'une pièce avec ladite paroi latérale.

5. Dispositif selon la revendication 1, caractérisé en outre en ce que ladite zone pouvant être rompue présente un contour périphérique défini par une gorge en encoche vers l'intérieur (30).

6. Dispositif selon la revendication 1, caractérisé en outre en ce que ledit bouchon (32) est réalisé en une matière plastique moulée et ladite zone pouvant être rompue est une zone (40) d'épaisseur réduite par rapport au reste dudit bouchon.

7. Dispositif selon l'une quelconque des revendications 1 à 6, caractérisé en outre en ce que ladite fermeture d'extrémité (24, 34) est munie d'un dessin ou impression de caractère distinctif réalisé par emboutissage (42) de façon à empêcher une copie.

Fig. 1.

Fig. 2.

Fig. 3.

Fig. 4.

Fig. 5.

Fig. 6.

Fig. 7.

1